# EUROPEAN PATENT SPECIFICATION

(11) **EP 3 586 996 B1**
(45) Date of publication and mention of the grant of the patent: **31.08.2022**
(21) Application number: 19183709.5
(22) Date of filing: 01.07.2019
(51) Int. Cl.: B22C 7/00, B22C 7/02, B22F 3/22, B22F 5/04, B29C 33/38, F01D 5/00, B33Y 80/00

(54) **POWDERED METAL OPEN MOLDS**
OFFENE FORMEN AUS PULVERFÖRMIGEM METALL
MOULES OUVERTS EN MÉTAL PULVÉRISÉ

(30) Priority: 29.06.2018 US 201816022917
(43) Date of publication of application: 01.01.2020
(73) Proprietor: Raytheon Technologies Corporation, Farmington, CT 06032 (US)
(72) Inventor: KLINGER, Jill, Charlottesville, VA Virginia 22902 (US); FRINK, Michael, Charlottesville, VA Virginia 22903 (US)
(74) Representative: Dehns

(56) References cited:
- DE-A1- 19 831 315
- US-A- 3 929 476
- US-A1- 2003 235 272
- US-A1- 2018 178 272

## Description

### BACKGROUND

Illustrative embodiments pertain to the art of molds and part manufacturing, and particularly to powder metal molds.

Cast powder metal parts are produced using an open casting mold made from flexible silicon or other polymer materials. The molds may be derived from a master tool that is produced using photolithographic processes. In some cases molding/casting process may require that extra material be added to the slurry for various reasons. For example, the extra material in the slurry may be provided to fill in fine featured-high aspect ratio silicon molds and to provide strength for de-molding castings from high aspect ratio silicon molds.

However, there are drawbacks to employing such extra material. For example, the extra material may create or form a backing on the cast. Subsequently, the backing must be removed to expose the cast features. In current processes, the top of the mold is flat. However, such orientation may not enhance or ease the casting process, de-casting process, or the removal of the backing. Accordingly, improved processes for making molds may be useful.

US 2003/235272 discloses a mold used for powder casting formed of micro-machined laminations defining the shape of the part to be cast; it therefore discloses the features of the pre-characterizing portions of claims 1 and 8.

### BRIEF DESCRIPTION

According to one aspect of the present invention, manufacturing assemblies are provided as described in claim 1. The manufacturing assemblies include a tool base, a plurality of tool elements extending from the tool base, the plurality of tool elements defining a shape of a formed part, with a cell formed between adjacent tool elements, and a tapered tool extension extending between the tool base and at least one tool element.

Embodiments of the manufacturing assemblies may include that each tool element extends from a tapered tool extension.

Embodiments of the manufacturing assemblies may include that the tool element extending from the tapered tool extension has a first geometry and the tapered tool extension has a second geometry.

Embodiments of the manufacturing assemblies may include that the first geometry and the second geometry are the same.

Embodiments of the manufacturing assemblies may include a mold formed between the plurality of tool elements, the mold comprising a plurality of layers of material.

Embodiments of the manufacturing assemblies may include that the mold comprises a plurality of mold elements arranged with the cell of the plurality of tool elements.

Embodiments of the manufacturing assemblies may include that at least one mold element comprises a tapered mold extension defined by the tapered tool extension.

Embodiments of the manufacturing assemblies may include that each mold element comprises a tapered mold extension.

Embodiments of the manufacturing assemblies may include that the formed part is an airfoil.

Embodiments of the manufacturing assemblies may include that the formed part is a portion of a component of a gas turbine engine.

Embodiments of the manufacturing assemblies may include that at least one tool element comprises a functional feature having at least one of a width, a depth, and a height equal to or greater than 0.005 mm.

According to another aspect of the present invention, molds for forming a formed part are provided as described in claim 8. The molds include a mold base, a plurality of mold elements extending from the mold base, a cell formed between adjacent mold elements wherein the cell defines a shape of the formed part, and a tapered mold extension extending from at least one mold element from an end opposite the mold base.

Embodiments of the molds may include that each mold element includes a tapered mold extension extending therefrom.

Embodiments of the molds may include that the mold element having the tapered mold extension has a first geometry and the tapered mold extension extending from the mold element has a second geometry.

Embodiments of the molds may include that the first geometry and the second geometry are the same.

Embodiments of the molds may include that each mold element is at least 2.5 mm in length extending from the mold base.

Embodiments of the molds may include that each mold element comprises a plurality of stacked layers of material.

Embodiments of the molds may include that the cell defines the shape of an airfoil.

Embodiments of the molds may include that the cell defines the shape of a portion of a component of a gas turbine engine.

Embodiments of the molds may include that at least one mold element comprises a functional feature having at least one of a width, a depth, and a height equal to or greater than 0.005 mm.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The following descriptions should not be considered limiting but are provided by way of example only. With reference to the accompanying drawings, like elements are numbered alike: The subject matter is particularly pointed out and distinctly claimed at the conclusion of the specification. The foregoing and other features, and advantages of the present disclosure are apparent from the following detailed description taken in conjunction with the accompanying drawings in which like elements may be numbered alike and:
FIG. 1 is a schematic cross-sectional illustration of a gas turbine engine that may incorporate components or elements that may be formed using molds in accordance with embodiments of the present disclosure;
FIG. 2 is a schematic illustration of a prior art mold;
FIG. 3 is a schematic illustration of a prior art manufacturing assembly that employs a mold as shown in FIG. 2;
FIG. 4A is a schematic illustration of a portion of a master tool in accordance with an embodiment of the present disclosure;
FIG. 4B is a schematic illustration of the master tool of FIG. 4A with mold material applied thereto;
FIG. 4C is a schematic illustration of a mold formed by using the master tool of FIG. 4A;
FIG. 5 is a schematic illustration of a manufacturing assembly in accordance with an embodiment of the present disclosure; and
FIG. 6 is a schematic isometric illustration of a portion of a mold in accordance with an embodiment of the present disclosure.

### DETAILED DESCRIPTION

Detailed descriptions of one or more embodiments of the disclosed apparatus and/or methods are presented herein by way of exemplification and not limitation with reference to the Figures.

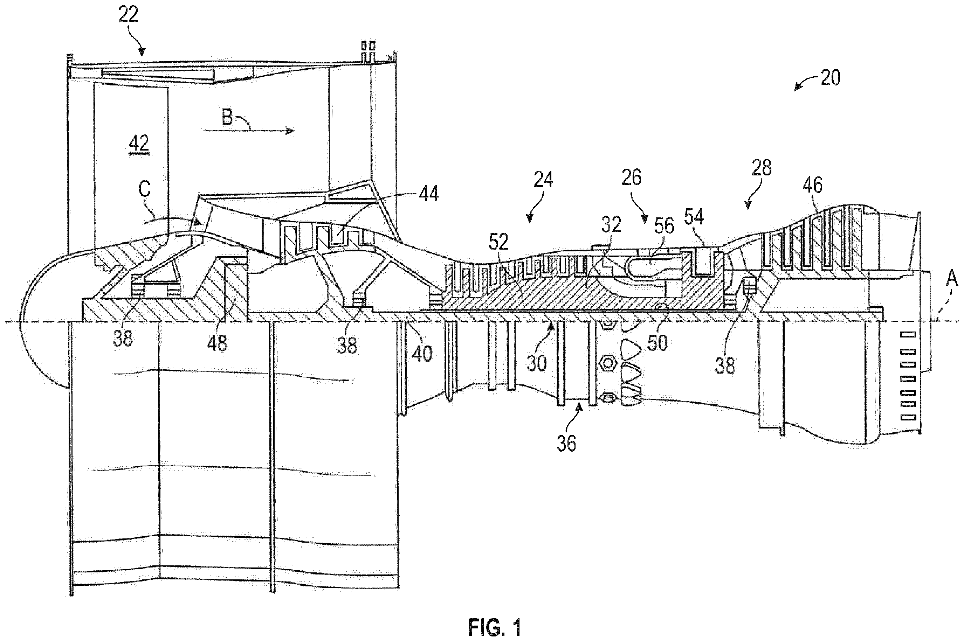

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a gear system 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

Embodiments of the present disclosure are directed to manufacturing processes for components of gas turbine engines, such as for forming fine component structures such as cooling features for airfoils, baffles, blade outer air seals, combustor panels, etc. Further, embodiments provided herein may be used for manufacturing components for various industries, as will be appreciated by those of skill in the art. For example, various applications may include antenna, computer components, integrated circuits, etc., as will be appreciated by those of skill in the art in view of the teachings herein.

Embodiments of the present disclosure are directed to improved master tools for manufacturing molds. In some embodiments the molds may be used for powdered metal open mold casting. In accordance with some embodiments, master tools that incorporate innovative geometry that enhances and/or eases the casting process, de-casting process, and/or the removal of the backing are provided. Embodiments of the present disclosure may be formed by adding extra layers to the master tool that are tapered from the cast features, and may be, in some embodiments, funnel shaped.

Because the tool is derived lithographically there is a high level of control in the manufacturing or formation process. For example, a tapered extension on a top surface of the mold can be on one side of a tool element or all sides of the tool element. In some such embodiments, a tapered surface may extend from the tool element, and in some embodiments may form a funnel shape. The tapered extension that extends from the top of a tool element can have any angle and length depending on the requirements of a particular application. Moreover, in some embodiments, the funnel may be uniform across the entire tool or some subset of tool elements may have tapered extensions different for various different regions of the tool.

The tapered extensions are produced in the master tool and are thus present in the resulting molding and casting phase of the process. The tapered extensions are particularly advantageous for casting fine features with high aspect ratios because the tapered extensions may optimize the slurry casting, cured part de-casting, and post-processing steps (such as surface grinding).

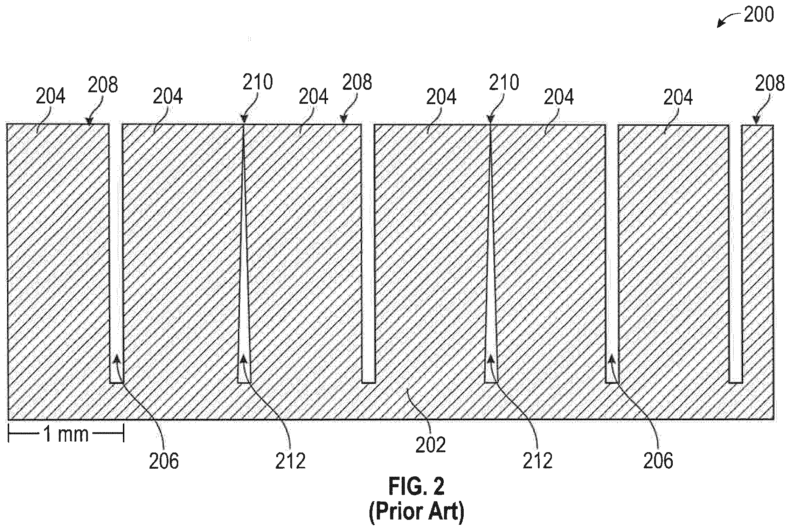

Turning to FIG. 2, a schematic illustration of a mold 200 of the prior art is shown. The mold 200 includes a base 202 and a plurality of mold elements 204. The mold elements 204 extend from the base 202 and are arranged to enable formation of a part. The mold elements 204 are separated by voids 206 into which a material such as a slurry, a powdered metal, etc. may be disposed in order to form the structure of the part defined by the mold 200. The mold 200 may be formed from a master tool that is shaped as the inverse of the mold 200, as will be appreciated by those of skill in the art. The mold 200 represents a typical mold geometry, with the mold elements 204 having element tops 208 that are flat.

In some embodiments, the mold 200 may be formed from silicon. In such embodiments a problem that may arise, particularly with silicon molds, is that some of the mold elements 204 may stick together, as shown, at contact points 210. The contacting mold elements 204 may thus define closed voids 212. The contact points 210 may prevent a material from entering the respective closed voids 212, or may prevent a uniform distribution of such material within the voids 206, 212. One solution to minimize such sticking is to apply a coating to the mold elements 204. However, such coatings may impact a final formed part and/or may be difficult to ensure complete coverage of the surfaces of the mold elements 204, and thus sticking may still occur. The sticking of the mold elements may cause poor fill which impacts yield.

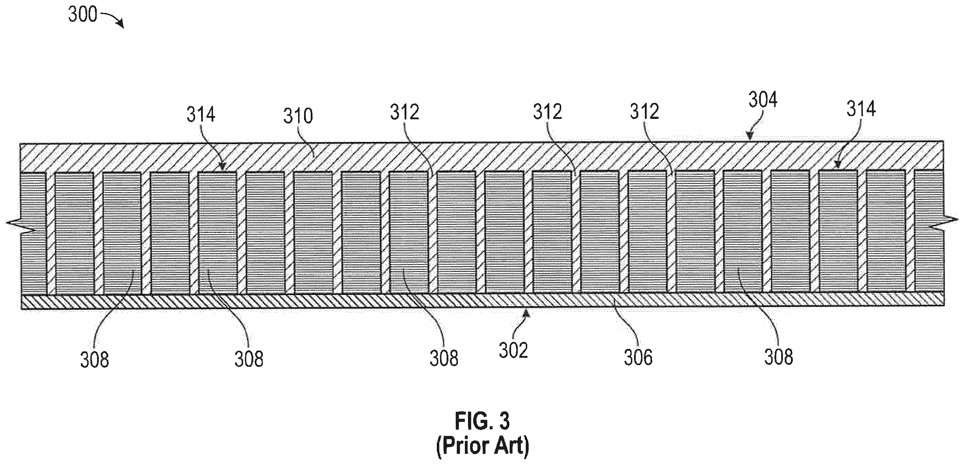

Turning now to FIG. 3, a schematic illustration of a manufacturing assembly 300 in accordance with prior processing is shown. The manufacturing assembly 300 includes a mold 302 and a formed part 304. The formed part 304 is formed through the application of a slurry to the mold 302, with the slurry filling in voids, gaps, or spaces defined by the mold 302. Once the slurry is cured or treated, the mold 302 may be removed, leaving a final part, as will be appreciated by those of skill in the art.

The mold 302 includes a mold base 306 and a plurality of mold elements 308 extending therefrom. The mold 302 may be manufactured from a master tool that is in the shape and/or design of the formed part 304 and/or of the final part, depending on the amount of post-processing and specific configuration/arrangement of the final part. The mold elements 308 may be formed through a layering process, and thus each of the mold elements 308 may be a stack of layers, as will be appreciated by those of skill in the art. Similar to that shown in FIG. 2, a series of voids or gaps may be present between adjacent mold elements 308, allowing for a slurry material to be poured onto the mold 302 and into the voids between the mold elements 308.

With the slurry poured, as shown in FIG. 3, the formed part 304 (from the slurry material) includes a backing 310. Extending from the backing 310 are a plurality of part elements 312. The backing 310 may result from the amount of slurry poured or applied to the mold 302, with the amount being applied being sufficient to ensure the slurry fills the voids of the mold 302. The part elements 312 may be discrete features or may be aspects of a grid and thus connected and/or interconnected. The part element 312, in this illustrative embodiment, are the structure of the final part, and the backing 310 must be removed. Accordingly, after the slurry is solidified, the mold 302 may be removed (e.g., by pulled separation, by chemical bath, etc.). After the mold 302 is removed, the formed part 304 may be post-processed to remove the backing 310. In some embodiments, a mechanical grinding may be used to remove the backing 310. As the backing 310 is removed, a very small amount of the material of the backing 310 may remain between ends of the part elements 312. That is, a thin layer of the material forming the formed part 304, after removal of the back 310, may remain where the tops 314 of the mold elements 308 were present during the formation process. The thin layer may be referred to as a chad and required removal to ensure the final part is properly formed.

In addition to the sticking problem described with respect to FIG. 2, the chads that may be formed from the process shown in FIG. 3 may also be problematic. For example, additional cleaning and post-processing steps may be required. Moreover, at times, the processed used to remove the chads may cause damage or risk causing damage or other impacts upon the final part. Accordingly, avoidance of such additional steps may be beneficial.

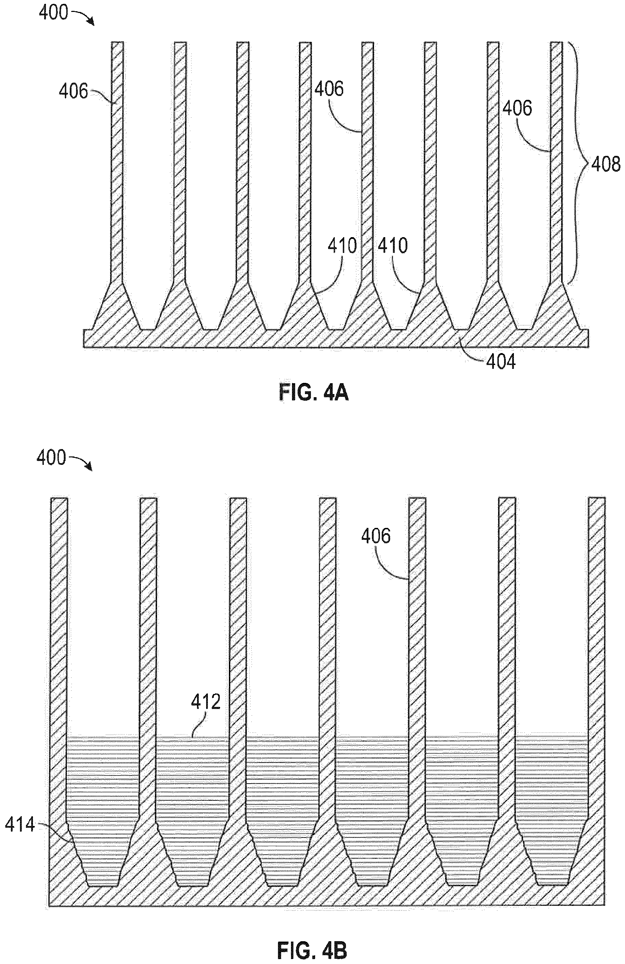

Turning now to FIGS. 4A-4C, schematic illustrations of aspects of the present disclosure in accordance with an embodiment of the present disclosure are shown.

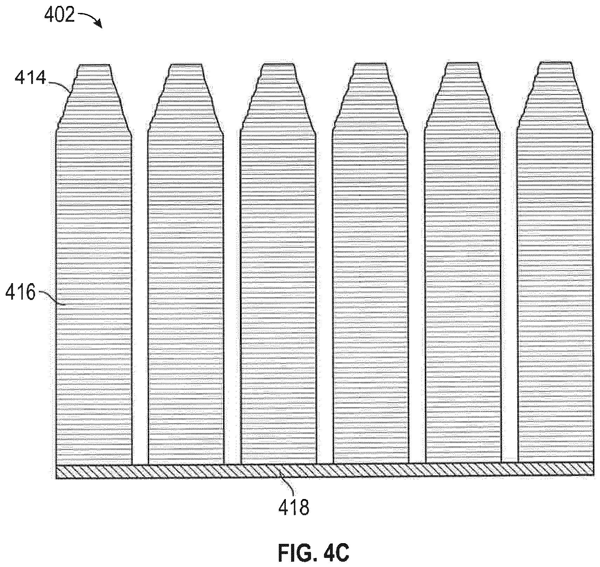

FIG. 4A is an illustration of a master tool 400 for forming a mold 402, with FIG. 4C illustrating the formed mold 402 and FIG. 4B illustrating an intermediate formation process. The master tool 400 may be used to form a mold, which in turn may be used to form a final part. As such, the master tool 400 may be formed and arranged with a geometry similar or substantially similar to the final part. However, the master tool 400 may include additional features that are required for the formation of the mold and manufacturing processes associated therewith.

For example, as shown, the master tool 400 includes a tool base 404 with a plurality of tool elements 406 extending therefrom. The tool elements 406 define a part geometry 408, such as a grid or other pattern. As shown, between the tool elements 406 and the tool base 404 are tapered tool extensions 410. The tapered tool extensions 410 may not define a portion of the part geometry 408, but rather may be provided to aid in the manufacturing process, of both the mold and the final part. The master tool 400 may be formed using a photolithographic process, as will be appreciated by those of skill in the art.

To form the mold 402, a plurality of layers of material 412 may be deposited between the tool elements 406 of the master tool 400 to form the mold 402. The material of the layers of material 412 may be silicon. As shown, a tapered mold extension 414 is formed within, between, or by the tapered tool extensions 410. Accordingly, the mold 402 includes the tapered mold extensions 414 extending at the tips or tops of respective mold elements 416 that are formed by the layers of material 412 and defined between the tool elements 406. The mold 402 may also include a mold base 418 that is formed of a sheet of the material of the layers of material 412 and may provide rigidity and structure to the mold 402 and also to define a bound or limit for the amount of slurry that may be poured over/into the mold 402 when forming a final part or product.

The tapered tool extensions 410 and the formed tapered mold extensions 414 increase the ease of separation of the mold 402 from the master tool 400, after all of the layers of material 412 are applied and the mold elements 416 are formed. Further, once formed in the mold 402, the tapered mold extensions 414 enable an easier separation or removal of the mold 402 from the formed part (or final part), and if any chads are formed during the process, removal of such chads may be easy and clean (because the chad is much smaller than the hole it needs to pass through).

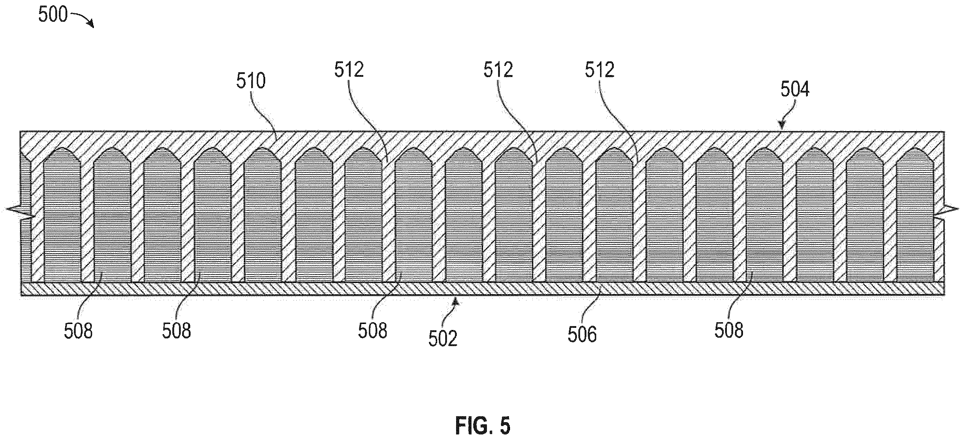

Turning now to FIG. 5, a schematic illustration of a manufacturing assembly 500 in accordance with an embodiment of the present disclosure is shown. The manufacturing assembly 500 includes a mold 502 and a formed part 504. The formed part 504 is formed through the application of a slurry to the mold 502, with the slurry filling in voids, gaps, or spaces defined by the mold 502. Once the slurry is cured or treated, the mold 502 may be removed, leaving a final part, as will be appreciated by those of skill in the art.

The mold 502 includes a mold base 506 and a plurality of mold elements 508 extending therefrom. The mold 502 may be manufactured from a master tool that is in the shape and/or design of the formed part 504 and/or of the final part, depending on the amount of post-processing and specific configuration/arrangement of the final part. The mold elements 508 may be formed through a layering process, and thus each of the mold elements 508 may be a stack of layers, as will be appreciated by those of skill in the art. Similar to that shown in FIGS. 4A-4C, a series of voids or gaps may be present between adjacent mold elements 508, allowing for a slurry material to be poured onto the mold 502 and into the voids between the mold elements 508.

With the slurry poured, as shown in FIG. 5, the formed part 504 (from the slurry material) includes a backing 510. Extending from the backing 510 are a plurality of part elements 512 at are defined between the mold elements 508. The backing 510 may result from the amount of slurry poured or applied to the mold 502, with the amount being applied being sufficient to ensure the slurry fills the voids of the mold 502. The part elements 512 may be discrete features or may be aspects of a grid and thus connected and/or interconnected. The part element 512, in this illustrative embodiment, are the structure of the final part, and the backing 510 must be removed. Accordingly, after the slurry is solidified, the mold 502 may be removed (e.g., by pulled separation, by chemical bath, etc.). After the mold 502 is removed, the formed part 504 may be post-processed to remove the backing 510. In some embodiments, a mechanical grinding may be used to remove the backing 510. As the backing 510 is removed, the spaces between adjacent part elements 512 may have all material completely removed (i.e., due to the tapered area formed by the tapered extensions of the present disclosure).

The tapered extensions (whether as part of the master tool or the mold) may have various geometries without departing from the scope of the present disclosure. For example, the tapered extensions may follow or mimic the geometry of the element from which they extend (e.g., cross-sectional shape of the element). However, in other embodiments, the tapered extensions may have a geometry that is different from the cross-section geometry of the element from which the tapered extensions extend.

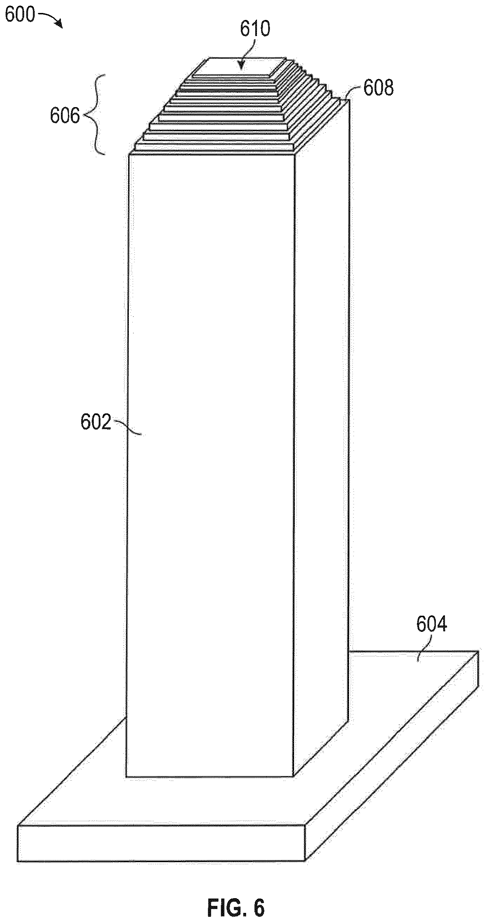

Turning to FIG. 6, an isometric illustration of a portion of a mold 600 formed in accordance with an embodiment of the present disclosure is shown. The mold 600 as shown includes a mold element 602 that extends from a mold base 604. The mold element 602 may be one of a plurality of mold elements that are arranged in define a pattern or other structure (e.g., for a surface of a component) that extend from the mold base 604. When the mold 600 is formed, a plurality of mold elements 602 may define voids, gaps, and/or cells therebetween. The cells, gaps, or voids between adjacent mold elements 602 define the shape and geometry of a final, formed part (e.g., based on a master tool). In a manufacturing process using the mold 600 and having the mold element 602, a slurry or other material, such as powered metal, may be deposited into the spaces between adjacent mold elements 602 and treated to form the final (or formed) part. The mold 600 may then be removed, leaving only the geometry and structure of the material that was deposited into the cells.

As shown, in this embodiment, the mold element 602 has a tapered extension 606 extending from an end of the mold element 602 opposite the mold base 640. The tapered extension 606 extends from a top or end 608 of the respective mold element 602, as shown and described above. In this embodiment, the tapered extension 606 has a tapering geometry that mimics the geometry and shape of the respective mold element 602. As such, for example, the mold element 602 of FIG. 6 has a generally square cross-sectional shape and the tapered extension 606 has similar square, tapered shape, with the size of the square geometry reducing along the length of the tapered extension 606 as it extends from the end 608 of the mold element 602. The tapered extension 606 has a tapering end 610 that may be flat or taper to a point or other shape, depending on the specific application.

In other embodiments, the tapered extensions may have the same or different geometry or shape from the element they extend from. For example, circular, oval, skew, etc. may be employed depending on the requirements of a specific application.

It will be appreciated that the mold 600 (and mold element 602) may be formed using a master tool that is shaped as a desired final product. The tapered extension 606 of the mold element 602 is formed by a corresponding tapered extension within the master tool, such as described above. That is, a master tool has a tool base and one or more tool elements extending from the tool base. Located between the tool base and the tool elements is a tapered tool extension, which defines the shape, contour, and bounds of the tapered extensions 606 of the mold elements 602.

The tapered extension geometry of the present disclosure benefits the molding and casting processes in various ways. For example, the tapered extensions may make it easier to de-mold, fill, and de-cast fine featured-high aspect ratio parts. As used herein, fine features refers to any functional feature in the master tool and can be minimum 0.005 mm in depth, width, and height. This includes indented text or visual orientation marks. As used herein, high aspect ratio refers to the master tool height divided by a wall thickness. For example, a 0.050 mm minimum wall thickness and 7.5 mm master tool maximum height, would result in an aspect ratio limit of 150. Typically, the wall thickness is 0.120 mm and the tool height is 2.5 mm, for an aspect ratio of 21. Moreover, embodiments provided herein may reduce the tendency of the mold elements to stick to one another (e.g., prevent the situation shown in FIG. 2).

Advantageously, because the mold elements are less likely to stick to one another, taller molds/casts can be produced. For example, due to the sticking issues, typical prior art molds may have been limited to 2mm, with anything taller having too great of a sticking problem. However, by employing embodiments of the present disclosure, taller elements are possible without experiencing the sticking problem. In one non-limiting example, molds that incorporate the tapered extensions of the present disclosure can extend the mold elements to 2.5mm or greater. The taller mold elements may reduce the number of zones that may be need to make a final assembly.

Further, advantageously, grinding and/or post-processing of the overcast backing on a formed part may be improved through the geometry that results from the mold tapered extensions. As such, the amount of grinding and/or cleaning that may be required post grinding can be reduced. With prior configurations, such as with the flat tops to the mold elements, the chads that are formed may be the same size as the cell and have a propensity to wedge into the cell. However, by employing the tapered extensions, the chad at break through is much smaller than the cell and falls through the cell.

As used herein, the term "about" is intended to include the degree of error associated with measurement of the particular quantity based upon the equipment available at the time of filing the application. For example, "about" may include a range of ± 8%, or 5%, or 2% of a given value or other percentage change as will be appreciated by those of skill in the art for the particular measurement and/or dimensions referred to herein.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an illustrative embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A manufacturing assembly comprising:
a tool base (404);
a plurality of tool elements (406) extending from the tool base, the plurality of tool elements defining a shape of a formed part, with a cell formed between adjacent tool elements; **characterized by**
a tapered tool extension (410) extending between the tool base and at least one tool element.

2. The manufacturing assembly of claim 1, wherein each tool element (406) extends from a tapered tool extension (410).

3. The manufacturing assembly of claim 1 or 2, wherein the tool element (406) extending from the tapered tool extension (410) has a first geometry and the tapered tool extension has a second geometry, and optionally
wherein the first geometry and the second geometry are the same.

4. The manufacturing assembly of any of claims 1, 2 or 3, further comprising a mold (402) formed between the plurality of tool elements (406), the mold comprising a plurality of layers of material (412).

5. The manufacturing assembly of claim 4, wherein the mold (402) comprises a plurality of mold elements (416) arranged with the cell of the plurality of tool elements (406), and optionally wherein at least one mold element comprises a tapered mold extension (414) defined by the tapered tool extension (410), and/or wherein each mold element comprises a tapered mold extension.

6. The manufacturing assembly of any preceding claim, wherein the formed part is an airfoil, and/or wherein the formed part is a portion of a component of a gas turbine engine (20).

7. The manufacturing assembly of any preceding claim, wherein at least one tool element (406) comprises a functional feature having at least one of a width, a depth, and a height equal to or greater than 0.005 mm.

8. A mold for forming a formed part, the mold comprising:
a mold base (418);
a plurality of mold elements (416) extending from the mold base, a cell formed between adjacent mold elements wherein the cell defines a shape of the formed part; **characterized by**
a tapered mold extension (414) extending from at least one mold element from an end opposite the mold base.

9. The mold of claim 8, wherein each mold element (416) includes a tapered mold extension (414) extending therefrom.

10. The mold of claim 8 or 9, wherein the mold element (416) having the tapered mold extension (414) has a first geometry and the tapered mold extension extending from the mold element has a second geometry, and optionally
wherein the first geometry and the second geometry are the same.

11. The mold of claim 8, 9 or 10, wherein each mold element is at least 2.5 mm in length extending from the mold base.

12. The mold of any of claims 8 to 11, wherein each mold element comprises a plurality of stacked layers of material.

13. The mold of any of claims 8 to 12, wherein the cell defines the shape of an airfoil.

14. The mold of any of claims 8 to 13, wherein the cell defines the shape of a portion of a component of a gas turbine engine.

15. The mold of any of claims 8 to 14, wherein at least one mold element comprises a functional feature having at least one of a width, a depth, and a height equal to or greater than 0.005 mm.

## Patentansprüche

1. Fertigungsbaugruppe, umfassend:
eine Werkzeugbasis (404);
eine Vielzahl von Werkzeugelementen (406), die sich von der Werkzeugbasis erstreckt, wobei die Vielzahl von Werkzeugelementen eine Form eines gebildeten Teils definiert,
wobei eine Zelle zwischen benachbarten Werkzeugelementen gebildet ist; charakterisiert durch
eine sich verjüngende Werkzeugverlängerung (410), die sich zwischen der Werkzeugbasis und mindestens einem Werkzeugelement erstreckt.

2. Fertigungsbaugruppe nach Anspruch 1, wobei sich jedes Werkzeugelement (406) von einer sich verjüngenden Werkzeugverlängerung (410) erstreckt.

3. Fertigungsbaugruppe nach Anspruch 1 oder 2, wobei das Werkzeugelement (406), das sich von der sich verjüngenden Werkzeugverlängerung (410) erstreckt, eine erste Geometrie aufweist und die sich verjüngende Werkzeugverlängerung eine zweite Geometrie aufweist, und optional
wobei die erste Geometrie und die zweite Geometrie gleich sind.

4. Fertigungsbaugruppe nach einem der Ansprüche 1, 2 oder 3, ferner umfassend eine Form (402), die zwischen der Vielzahl von Werkzeugelementen (406) gebildet ist, wobei die Form eine Vielzahl von Materialschichten (412) umfasst.

5. Fertigungsbaugruppe nach Anspruch 4, wobei die Form (402) eine Vielzahl von Formelementen (416) umfasst, die mit der Zelle der Vielzahl von Werkzeugelementen (406) angeordnet ist, und wobei optional mindestens ein Formelement eine sich verjüngende Formverlängerung (414) umfasst, die durch die sich verjüngenden Werkzeugverlängerungen (410) definiert ist, und/oder wobei jedes Formelement eine sich verjüngende Formverlängerung umfasst.

6. Fertigungsbaugruppe nach einem vorhergehenden Anspruch, wobei das gebildete Teil ein Schaufelprofil ist und/oder wobei das gebildete Teil ein Abschnitt eines Bauteils eines Gasturbinentriebwerks (20) ist.

7. Fertigungsbaugruppe nach einem vorhergehenden Anspruch, wobei mindestens ein Werkzeugelement (406) ein funktionales Merkmal umfasst, das mindestens eines von einer Breite, einer Tiefe und einer Höhe gleich oder größer als 0,005 mm aufweist.

8. Form zum Bilden eines gebildeten Teils, wobei die Form umfasst:
eine Formbasis (418);
eine Vielzahl von Formelementen (416), die sich von der Formbasis erstreckt, wobei eine Zelle zwischen benachbarten Formelementen gebildet ist, wobei die Zelle eine Form des gebildeten Teils definiert; charakterisiert durch eine sich verjüngende Formverlängerung (414), die sich von mindestens einem Formelement von einem Ende gegenüber der Formbasis erstreckt.

9. Form nach Anspruch 8, wobei jedes Formelement (416) eine sich verjüngende Formverlängerung (414) aufweist, die sich davon erstreckt.

10. Form nach Anspruch 8 oder 9, wobei das Formelement (416), das die sich verjüngende Formverlängerung (414) aufweist, eine erste Geometrie aufweist und die sich verjüngende Formverlängerung, die sich von dem Formelement erstreckt, eine zweite Geometrie aufweist, und optional
wobei die erste Geometrie und die zweite Geometrie gleich sind.

11. Form nach Anspruch 8, 9 oder 10, wobei jedes Formelement eine Länge von mindestens 2,5 mm, die sich von der Formbasis erstreckt, aufweist.

12. Form nach einem der Ansprüche 8 bis 11, wobei jedes Formelement eine Vielzahl gestapelter Materialschichten umfasst.

13. Form nach einem der Ansprüche 8 bis 12, wobei die Zelle die Form eines Schaufelprofils definiert.

14. Form nach einem der Ansprüche 8 bis 13, wobei die Zelle die Form eines Abschnitts eines Bauteils eines Gasturbinentriebwerks definiert.

15. Form nach einem der Ansprüche 8 bis 14, wobei mindestens ein Formelement ein funktionelles Merkmal umfasst, das mindestens eines von einer Breite, einer Tiefe und einer Höhe gleich oder größer als 0,005 mm aufweist.

## Revendications

1. Ensemble de fabrication comprenant :
une base d'outil (404) ;
une pluralité d'éléments d'outil (406) s'étendant depuis la base d'outil, la pluralité d'éléments d'outil définissant une forme d'une pièce formée, avec une cellule formée entre des éléments d'outil adjacents ; **caractérisé par**
une extension d'outil conique (410) s'étendant entre la base d'outil et au moins un élément d'outil.

2. Ensemble de fabrication selon la revendication 1, dans lequel chaque élément d'outil (406) s'étend depuis une extension d'outil conique (410).

3. Ensemble de fabrication selon la revendication 1 ou 2, dans lequel l'élément d'outil (406) s'étendant depuis l'extension d'outil conique (410) a une première géométrie et l'extension d'outil conique a une seconde géométrie, et éventuellement dans lequel la première géométrie et la seconde géométrie sont identiques.

4. Ensemble de fabrication selon l'une quelconque des revendications 1, 2 ou 3, comprenant en outre un moule (402) formé entre la pluralité d'éléments d'outil (406), le moule comprenant une pluralité de couches de matériau (412).

5. Ensemble de fabrication selon la revendication 4, dans lequel le moule (402) comprend une pluralité d'éléments de moule (416) agencés avec la cellule de la pluralité d'éléments d'outil (406), et éventuellement dans lequel au moins un élément de moule comprend une extension de moule conique (414) définie par l'extension d'outil conique (410), et/ou dans lequel chaque élément de moule comprend une extension de moule conique.

6. Ensemble de fabrication selon une quelconque revendication précédente, dans lequel la pièce formée est un profil aérodynamique, et/ou dans lequel la pièce formée est une partie d'un composant d'un moteur à turbine à gaz (20).

7. Ensemble de fabrication selon une quelconque revendication précédente, dans lequel au moins un élément d'outil (406) comprend une caractéristique fonctionnelle ayant au moins l'une d'une largeur, d'une profondeur et d'une hauteur égale ou supérieure à 0,005 mm.

8. Moule pour former une pièce formée, le moule comprenant une base de moule (418) ;
une pluralité d'éléments de moule (416) s'étendant depuis la base de moule, une cellule formée entre des éléments de moule adjacents dans lequel la cellule définit une forme de la pièce formée ; **caractérisé par**
une extension de moule conique (414) s'étendant depuis au moins un élément de moule à partir d'une extrémité opposée à la base de moule.

9. Moule selon la revendication 8, dans lequel chaque élément de moule (416) comporte une extension de moule conique (414) s'étendant à partir de celui-ci.

10. Moule selon la revendication 8 ou 9, dans lequel l'élément de moule (416) ayant l'extension de moule conique (414) a une première géométrie et l'extension de moule conique s'étendant depuis l'élément de moule a une seconde géométrie, et éventuellement
dans lequel la première géométrie et la seconde géométrie sont identiques.

11. Moule selon la revendication 8, 9 ou 10, dans lequel chaque élément de moule a une longueur d'au moins 2,5 mm s'étendant depuis la base de moule.

12. Moule selon l'une quelconque des revendications 8 à 11, dans lequel chaque élément de moule comprend une pluralité de couches de matériau empilées.

13. Moule selon l'une quelconque des revendications 8 à 12, dans lequel la cellule définit la forme d'un profil aérodynamique.

14. Moule selon l'une quelconque des revendications 8 à 13, dans lequel la cellule définit la forme d'une partie d'un composant d'un moteur à turbine à gaz.

15. Moule selon l'une quelconque des revendications 8 à 14, dans lequel au moins un élément de moule comprend une caractéristique fonctionnelle ayant au moins l'une d'une largeur, d'une profondeur et d'une hauteur égale ou supérieure à 0,005 mm.
